# EUROPÄISCHE PATENTSCHRIFT

(11) **EP 1 688 659 B1**
(45) Veröffentlichungstag und Bekanntmachung des Hinweises auf die Patenterteilung: **16.12.2009**
(21) Anmeldenummer: 06001287.9
(22) Anmeldetag: 21.01.2006
(51) Int. Cl.: F16M 11/14, F16C 11/06

(54) **Universalgelenkanordnung zwischen einem Gerätehalter und einem Tragarm oder einer Konsole**
Universal joint device between an apparatus holder and a supporting arm or a console
Dispositif de joint universel entre un support d'appareil et un bras de support ou une console

(30) Priorität: 07.02.2005 DE 202005001986 U
(43) Veröffentlichungstag der Anmeldung: 09.08.2006
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- GB-A- 155 084
- GB-A- 2 024 926
- GB-A- 2 096 234
- US-A- 86 173
- US-A- 4 957 359

## Beschreibung

Die Erfindung betrifft eine Universalgelenkanordnung zur Verbindung eines Gerätehalters oder einer Gerätehalter-Montageplatte oder dergl. mit einem Tragarm oder einer Konsole.

Mobile Geräte wie Kleincomputer, sogenannte PDAs (Personal Digital Assistant), Navigationsgeräte, Mobiltelefone und dergleichen werden in Kraftfahrzeugen, auf Schreibtischen oder an anderen Orten unter Verwendung von Geräteträgern benutzt, die eine Konsole oder einen Tragarm aufweisen, an der bzw. dem über einen Gelenkmechanismus ein Gerätehalter oder eine Montageplatte zu dessen Aufnahme verbunden ist, so daß das betreffende Gerät in eine für das Betrachten der visuellen Anzeige des Geräts und zum Bedienen des Geräts bequeme Position einstellen zu können.

Universalgelenke zu diesem Zweck sind sowohl in Gestalt zweier aufeinanderfolgender und rechtwinklig zueinander angeordneter Scharniergelenke als auch in Gestalt von Kugelgelenken mit einer kugelig gewölbten Pfanne und einem kugelsegmentförmigen Gelenkteil bekannt. Damit das betreffende Gerät in der gewählten Position stabil verbleibt, ist es natürlich erforderlich, den Gelenkmechanismus feststellbar zu machen oder vorzuspannen, um einen ausreichenden Reibschluß zwischen den Gelenkteilen herzustellen. Bei bekannten Kugelgelenkmechanismen wird die notwendige Klemmspannung dadurch erzeugt, daß eine Schraube von der Montageplatten- bzw. Gerätehalterseite her in den Pfannenbereich des Gelenkmechanismus eingeschraubt und im notwendigen Maße festgezogen wird. Da die Gelenkteile im wesentlichen alle aus Kunststoff bestehen, der bekanntlich einen großen Wärmedehnungskoeffizienten hat, gibt es insbesondere beim Einsatz in Fahrzeugen wegen der dort auftretenden großen Temperaturänderungen, beispielsweise beim Aufheizen der Innentemperatur eines in der Sonne stehenden Fahrzeugs im Sommer, erhebliche Probleme dahingehend, daß die Klemmspannung sich so lockert, daß der Gerätehalter seine eingestellte Position nicht mehr beibehalten kann. Das ist nicht nur ärgerlich, weil dadurch die Benutzung des Geräts erheblich beeinträchtigt wird, sondern auch dadurch, daß das erforderliche Nachspannen nur mit Hilfe eines passenden Schraubendrehers und erst nach Abnehmen mindestens des Gerätehalters, wenn nicht gar auch noch der Montageplatte, möglich ist.

Es besteht daher das Bedürfnis, eine Anordnung zu schaffen, mit welcher das aufgezeigte Problem leicht und ohne besonderen konstruktiven Aufwand in den Griff zu bekommen ist. Das kann mit einer Universalgelenkanordnung erreicht werden.

Eine Universalgelenkanordnung nach dem Oberbegriff des Anspruchs 1 ist aus der GB 2 096 234 A bekannt. Dort ist eine Schwenkhalterung für einen Bildschirmmonitor bekannt, mit einem Ständerfuß, der mit einer Kugelpfanne ausgebildet ist, weiter mit einem Halter für den Bildschirmmonitor; der als Kugelschale ausgebildet ist und in der Kugelpfanne sitzt, und einem von oben gegen die Kugelschale spannt und mit einem daran angeordneten Schaft durch eine Öffnung der Kugelschale hindurchverläuft und mit einem hinterhalb der Kugelpfanne angeordneten Betätigungsorgan in Gestalt eines Klemmrads zusammenwirkt. Dabei ist die Öffnung in der Kugelschale in Gestalt eines diametral verlaufenden Schlitzes ausgebildet, der nur ein Schwenken in einer Ebene ermöglicht, allerdings auch ein Drehen um die Schaftachse zulässt.

Die Erfindung bezweckt eine Verbesserung einer deratigen Universalgelenkanordnung im Hinblick auf die Bedürfnisse eines PDA-Halters.

Diese Aufgabe wird nach der Erfindung durch die Anordnung nach Patentanspruch 1 gelöst.

Einige Ausfiihrungsbeispiele der Erfindung sind in den Zeichnungen dargestellt und werden nachstehend beispielshalber beschrieben. In den Zeichnungen zeigt:
- Fig. 1: eine Seitenansicht der Kugelgelenkanordnung,
- Fig. 2: einen Axialschnitt durch die Kugelgelenkanordnung nach Fig. 1 in einer zur Zeichenebene der Fig. 1 um 90° gedrehten Schnittebene,
- Fig. 3: als Anwendungsbeispiel einen Geräteträger mit einer Gelenkanordnung nach der Erfindung,
- die Fig. 4a, 4b und 4c: eine weitere Ausführungsform einer Gelenkanornung nach der Erfindung mit einem Betätigungshebel in Ansicht und zwei um 90° zueinander gedrehten Schnittansichten,
- die Fig. 5a, 5b und 5c: eine noch weitere Ausführungsform einer Gelenkanordnung nach der Erfindung mit Federvorspannung und einem Betätigungshebel in Ansicht und zwei um 90° zueinander gedrehten Schnittansichten, und
- die Fig. 6a, 6b und 6c: eine noch weitere Ausführungsform einer Gelenkanordnung nach der Erfindung mit einem Schiebekeil als Betätigungselement in Ansicht und zwei um 90° zueinander gedrehten Schnittansichten.

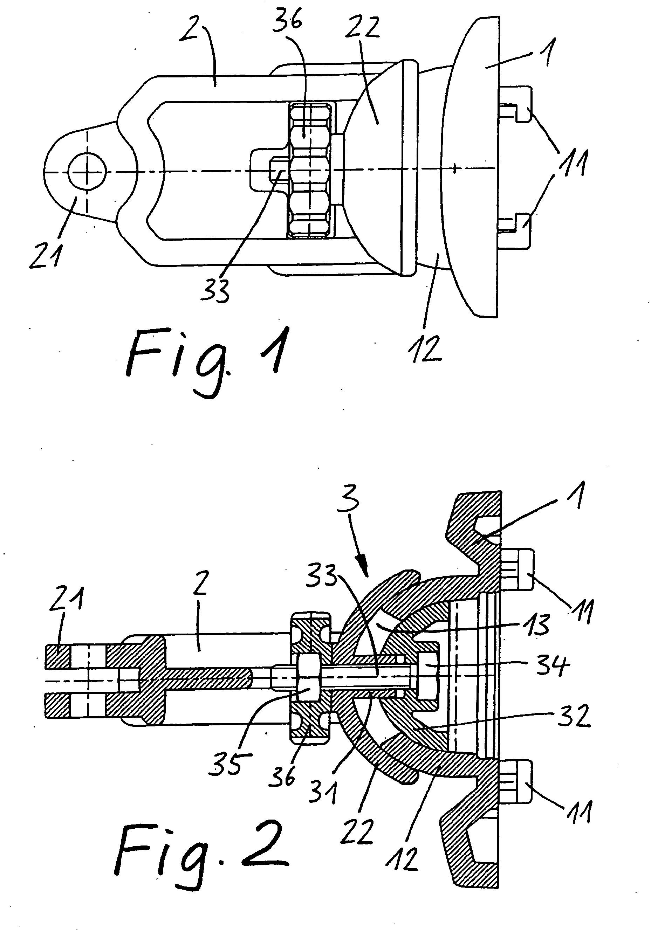

Die Figuren 1 und 2 zeigen eine erfindungsgemäße Gelenkanordnung am Ausführungsbeispiel der Verbindung einer Gerätehaltermontageplatte 1 mit einem kurzen Schwenkarm 2 als Endglied eines Geräteträgers, der im übrigen nicht dargestellt ist. Die Gerätehaltermontageplatte 1 weist eine Anordnung von Winkelkrallen 11 auf, die mit entsprechenden Rastschlitzen des nicht dargestellten Gerätehalters zusammenwirkt und mit diesem eine Schnellkupplung zum lösbaren Anbringen des Gerätehalters bildet. Der Schwenkarm 2, der in der Zeichnung sehr kurz dargestellt ist, kann natürlich eine beliebige Länge haben und weist hinten ein gabelförmiges Scharnierelement 21 auf, das mit einem entsprechenden Gegenelement eines Scharniergelenkmechanismus zusammenwirkt.

Wie Figur 1 in der Ansicht und Figur 2 im Schnitt (in einer um 90° gedrehten Ebene) zeigt, besteht die Kugelgelenkanordnung zwischen der Gerätehaltermontageplatte 1 und dem Schwenkarm 2 aus einem rückseitig an der Montageplatte 1 angeordneten kugelschalenförmigen Kugelgelenkelement 12, einer am vorderen Ende des Schwenkarms 2 angeordneten Kugelsegmentpfanne 22, und einem Gelenkspannmechanismus 3.

Der Gelenkspannmechanismus 3 weist einen in der Kugelsegmentpfanne 22 vorspringend angeordneten Hohlzapfen 31, einen auf dessen freies Ende aufgesetzten kugelsegmentförmigen Spannkörper 32, eine vom Spannkörper 32 durch den Hohlzapfen 31 hindurchverlaufende Schraube 33 mit in einer entsprechenden Aussparung des Spannkörpers 32 drehfest sitzendem Schraubenkopf 34, eine hinterhalb der Kugelsegmentpfanne 22 auf der Schraube 33 sitzende Mutter 35 mit einem diese Mutter drehfest aufnehmenden Stellrad 36 auf. Wie Figur 2 zeigt, hat der Spannkörper an seiner der Pfanne 22 zugewandten Seite ein zylindrisches Sackloch, welches das freie Ende des Hohlzapfens 31 aufnimmt und eine relative Axialverschiebung zwischen dem Spannkörper 32 und dem Hohlzapfen 31 über eine gewisse Distanz ermöglicht.

Das kugelschalenförmige Kugelgelenkteil 12 ist also, wie man sieht, zwischen der Pfanne 22 und dem Spannkörper 32 aufgenommen und zwischen diesen einspannbar. Das Kugelgelenkelement 12 hat, wie aus Figur 2 hervorgeht, eine große mittige Öffnung 13, durch welche der Hohlzapfen 31 hindurchverläuft und die so bemessen ist, daß der notwendige allseitige Schwenkbereich der Montageplatte 1 erreicht wird.

Durch Drehen des am Umfang vorzugsweise gerändelten bzw. profilierten Stellrads 36 kann die Kugelgelenkanordnung jederzeit bei auf der Montageplatte 1 verrasteten Gerätehalter ohne jegliches Werkzeug gespannt, nachgespannt oder zum Verstellen gelockert werden.

Wie man insbesondere aus Figur 1 erkennt, ist beim Ausführungsbeispiel das Stellrad 36 innerhalb eines durch den Schwenkarm 2 gebildeten flächigen Rahmens angeordnet und dort an zwei gegenüberliegenden Seiten leicht mit zwei Fingern zu ergreifen. Es versteht sich, daß der Schwenkarm 2 als solcher in beliebiger Weise ausgebildet oder durch ein anderes Glied eines Geräteträgers ersetzt sein kann.

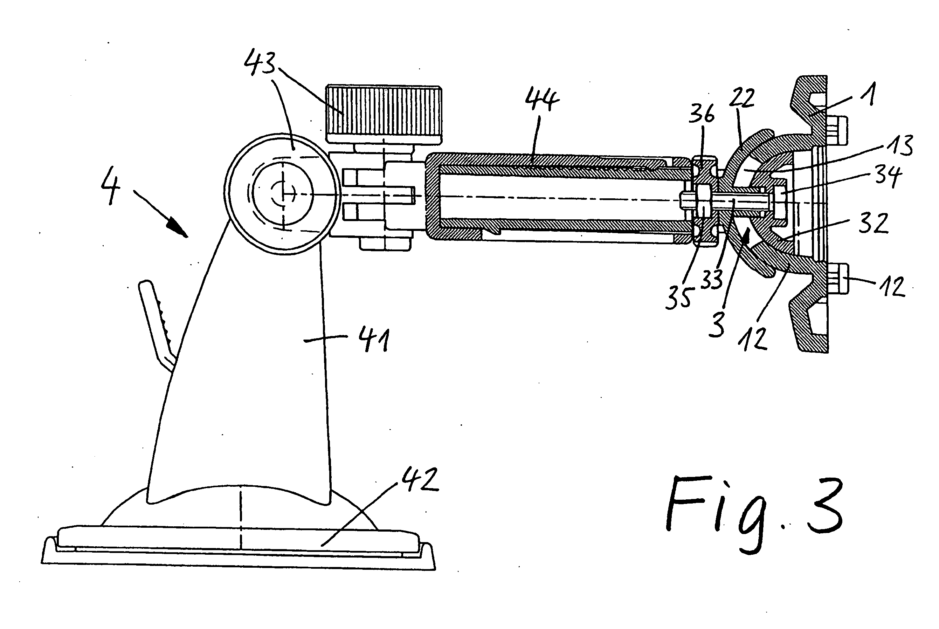

Als konkretes Anwendungsbeispiel ist in Figur 3 ein kompletter Geräteträger 4 mit einer Säule 41, einem daran angeordneten Saugfuß 42 mit innerhalb der Säule angeordnetem Saugerbetätigungsmechanismus, und einem über eine Scharniergelenkanordnung 43 mit zwei um 90° versetzten Scharnierachsen mit der Säule 41 verbundenen Teleskoparm 44, an dessen freiem Ende eine Gerätehaltermontageplatte 1 mittels einer eben in ihren Einzelheiten beschriebenen Kugelgelenkanordnung mit einem Gelenkspannmechanismus 3 verbunden ist.

Abweichend vom dargestellten Ausführungsbeispiel nach den Figuren 1 bis 3 kann die Kugelgelenkanordnung mit ihrem Spannmechanismus auch derart ausgebildet sein, daß das Stellrad 36 mit dem Kopf einer Schraube verbunden ist, die mit einer im Spannkörper 32 eingesetzten Mutter zusammenwirkt.

Weiter kann abweichend vom dargestellten Ausführungsbeispiel nach den Figuren 1 bis 3 die Schraube 33 fest mit dem Schwenkarm 2 verbunden sein.

Nach einer weiteren, nicht dargestellten Abwandlung des in den Figuren 1 bis 3 dargestellten Ausführungsbeispiel kann das Stellrad 36 durch einen Schwenkhebel ersetzt sein, der ebenso wie das Stellrad 36 um die Längsachse der Schraube 33 bzw. des Schwenkarms 2 oder der Kugelgelenkanordnung schwenkbar ist und mit einem die Schraube 33 ersetzenden Steilgewinde oder dergleichen zusammenwirkt, oder der Schwenkhebel und die Kugelpfanne 22 können über eine entweder am Schwenkhebel oder an der Kugelpfanne angeordnete Rampe miteinander zusammenwirken, welche die Schwenkdrehbewegung in eine axiale Relativbewegung zwischen Schwenkhebel und Kugelpfanne oder zwischen Schwenkhebel und Spannkörper 32 zum Zusammenspannen der Kugelgelenkanordnung umsetzt.

Nunmehr wird auf die in den weiteren Zeichnungsfiguren dargestellten Ausführungsbeispiele Bezug genommen.

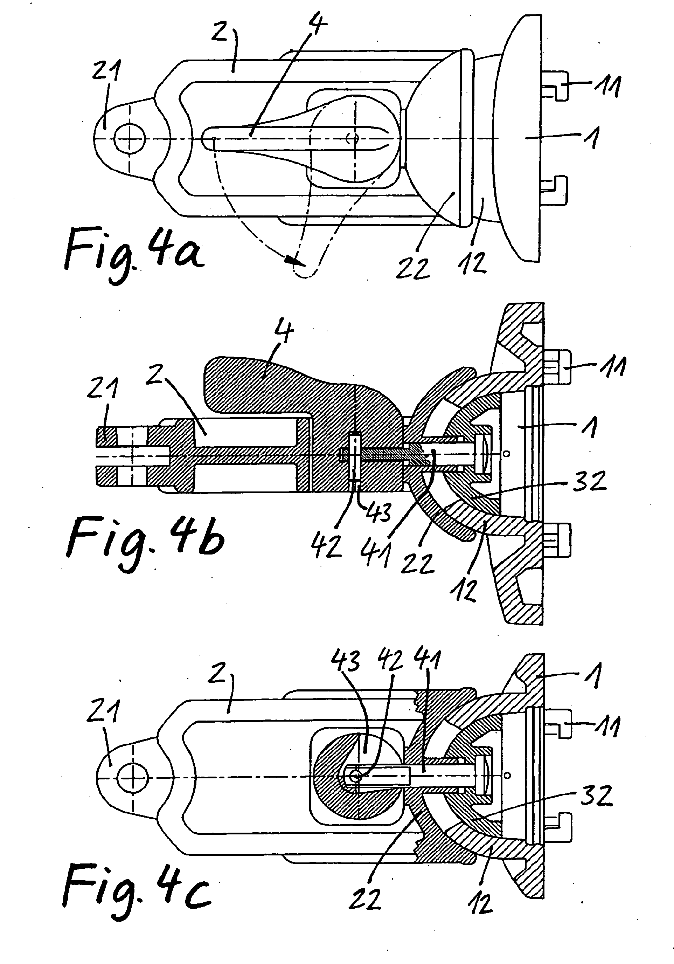

Die Figuren 4a bis 4c zeigen eine Ausführungsform mit einem Exzenterschwenkhebel 4, der um eine quer zur Längsachse der Kugelgelenkanordnung bzw. des Schwenkarms 2 verlaufende Achse zwischen einer Lösestellung und einer Spannstellung schwenkbar ist. Ein vom Spannkörper 32 durch die Kugelgelenkelemente verlaufender Schaft 41 ist an seinem schwenkhebelseitigen Ende über einen Querstift 42 mit dem Schwenkhebel 4 verbunden, wie aus Figur 4b ersichtlich ist. Das Ende des Schafts 41 ist in einer Aussparung 43 des Schwenkhebels 4 aufgenommen, der eine dem Schwenkbereich des Schwenkhebels 4 (in Figur 4a dargestellt) entsprechende Winkelausdehnung hat, wie in Figur 4c ersichtlich ist.

Bei dieser Ausführungsform bewirkt das Schwenken des Schwenkhebels zwischen seiner in den Figuren 4a und 4b dargestellten Lösestellung und der in Figur 4a strichpunktiert eingezeichneten Spannstellung ein axiales Zusammenspannen der Kugelgelenkelemente bzw. beim Schwenken des Schwenkhebels 4 in die Lösestellung ein Lösen der Verspannung.

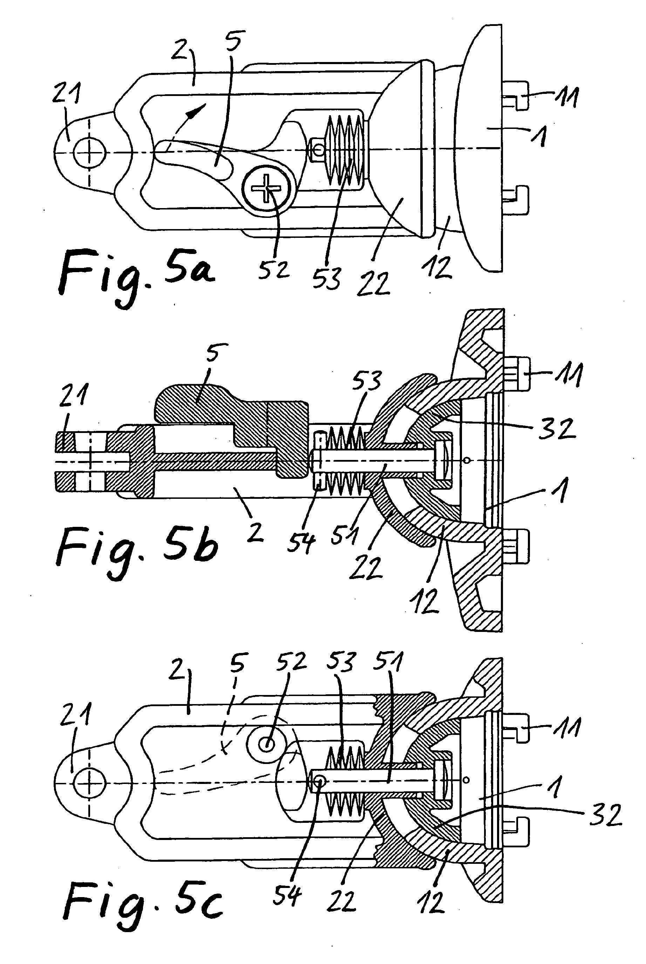

Bei dem Ausführungsbeispiel nach den Figuren 5a bis 5c ist wiederum ein quer zur Längsachse der Kugelgelenkanordnung schwenkbarer Betätigungshebel 5 vorgesehen, der mit der Endfläche eines vom Spannkörper 32 ausgehenden Schafts 51 zusammenwirkt. Der Betätigungshebel 5 ist dabei um eine von der Längsachse der Kugelgelenkanordnung bzw. des Schafts 51 seitwärts versetzte Querachse 52 schwenkbar. Über dem Schaft 51 hinterhalb der Kugelpfanne 22 sitzt ein Tellerfederpaket 53, das durch einen Querstift 54 gehalten wird, der durch das freie Ende des Schafts 51 verläuft. Dieses Tellerfederpaket spannt den Schaft 51 und damit den Spannkörper 32 in die Spannstellung vor. Durch Schwenken des in seiner Ruhestellung dargestellten Betätigungshebels 5 in Richtung des in Figur 5a eingezeichneten Pfeils wird der Schaft 51 entgegen der Vorspannung durch das Tellerfederpaket 53 axial im Sinne eines Lösens der Verspannung der Kugelgelenkanordnung verschoben. Bei Rückbewegung des Betätigungshebels 5 in seine Lösestellung bewirkt das Tellerfederpaket 53 wieder das selbsttätige Verspannen und damit Arretieren der Kugelgelenkanordnung.

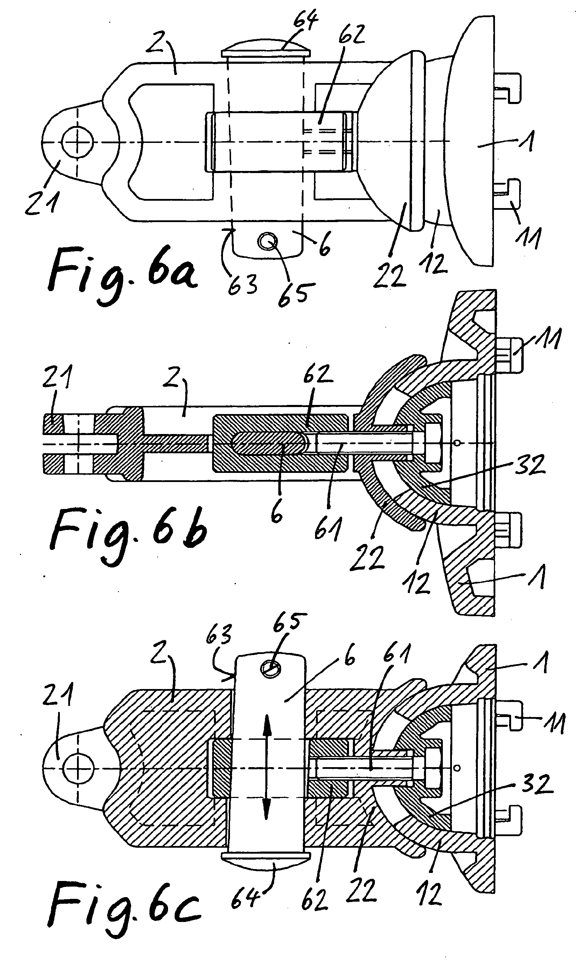

Bei der in den Figuren 6a bis 6c dargestellten Ausführungsform dient zur Betätigung des Gelenkspannmechanismus ein Schiebekeil 6, der mit einem Schaft zusammenwirkt, der beim dargestellten Ausführungsbeispiel durch eine Schraube 61 und einen Block 62 gebildet ist. Die Schraube 61 verbindet dabei den Spannkörper 32 mit dem Block 62. Der Schiebekeil durchsetzt eine entsprechende Queraussparung des Blocks 62, wie in den Figuren 6b und 6c in zwei um 90° gegeneinander versetzten Ansichten gezeigt ist. Dabei hat der Schiebekeil an seiner von der Gelenkanordnung abgewandten Seite eine leicht schräge Kantenfläche 63, die mit einer entsprechend ausgebildeten, leicht schrägen Gegenfläche der Aussparung des Blocks 62 zusammenwirkt.

In den Zeichnungen ist die Anordnung in der Spannstellung dargestellt, in welcher ein etwas verdickter Kopf 64 des Schiebekeils 6 am Schwenkarm 2 anschlägt. Wird aus dieser Spannstellung der Schiebekeil 6, bezogen auf die Darstellung in Figur 6c, in Pfeilrichtung nach unten in die Lösestellung verschoben, wird die Gelenkanordnung entspannt. Dabei dient ein Querstift 65 am freien Ende des Schiebekeils als Begrenzungsanschlag für die Schiebekeilbewegung; der Begrenzungsanschlag für die Verschiebung des Schiebekeils in die Spannstellung wird durch den Kopf 64 gebildet.

## Patentansprüche

1. Universalgelenkanordnung zwischen dem Endglied (2) eines Geräteträgers und einer Gerätehaltermontageplatte (1) oder einem Gerätehalter, wobei ein am Endglied (2) angeordnetes Kugelgelenkelement (22) mit einem an der Gerätehaltermontageplatte bzw. am Gerätehalter angeordneten Kugelgelenkelement (12) zusammenwirkt und die beiden Kugelgelenkelemente (12, 22) mittels eines Gelenkspannmechanismus (3) reibschlüssig zusammenspannbar sind,
wobei der Gelenkspannmechanismus (3) einen montageplattenseitig bzw. gerätehalterseitig angeordneten Spannkörper (32) zum Spannen des montageplattenseitigen bzw. gerätehalterseitigen, als Kugelschale ausgebildeten Kugelgelenkelements (12) gegen das endgliedseitige, als Kugelpfanne ausgebildete Kugelgelenkelement (22) und einen vom Spannkörper (32) durch beide Kugelgelenkelemente (12, 22) zum Endglied (2) hin hindurchverlaufenden Schaft (33; 41; 51; 61) sowie ein hinterhalb des endgliedseitigen Kugelgelenkelements (22) angeordnetes Betätigungsorgan (36; 4; 5; 6) aufweist, das im Sinne der Erzeugung einer axialen Relativbewegung zwischen ihm und dem Spannkörper (32) zum Zwecke des Zusammenspannens oder Entspannens der Kugelgelenkelerriente (12, 22) durch den Spannkörper (32) mit dem Schaft zusammenwirkt, und wobei das montagenplattenseitige bzw. gerätehalterseitige, als Kugelschale ausgebildete Kugelgelenkelement (12) eine große mittige Öffnung (13) aufweist, durch welche der Schaft (33; 41; 51; 61) hindurchverläuft und deren spiel den Schwenkbereich dieses Kugelgelenkelements (12) bestimmt,
**dadurch gekennzeichnet, daß** das als Kugelpfanne ausgebildete Kugelgelenkelement (22) einen axial vorspringenden, den Schaft führenden Hohlzapfen (31) auf weist, auf dessen freiem Ende der Spannkörper (32) axial beweglich geführt ist.

2. Universalgelenkanordnung nach Anspruch 1, wobei der Gelenkspannmechanismus (3) eine Schrauben-Mutter-Paarung aufweist, von denen das eine Element, Schraube oder Mutter, drehfest mit dem Spannkörper (32) verbunden ist und das jeweils andere Element, Mutter oder Schraube, drehfest mit einem das Betätigungsorgan bildenden fingerbetätigbaren Stellrad (36) verbunden ist, wobei die Schraube (33) jeweils den genannten Schaft bildet.

3. Universalgelenkanordnung nach Anspruch 2, wobei die Schraube (33, 34) drehfest mit dem Spannkörper (32) verbunden ist und das Stellrad (36) drehfest mit der Mutter (35) verbunden ist, die hinterhalb des endgliedseitigen Kugelgelenkelements (22) auf dem Schraubenbolzen (33) sitzt.

4. Universalgelenkanordnung Anspruch 3, wobei die Schraube (33, 34) einen im Spannkörper (32) formschlüssig drehfest aufgenommenen Schraubenkopf (34) aufweist.

5. Universalgelenkanordnung nach Anspruch 1, wobei der Schaft (41) mit seinem vom Spannkörper (32) entfernten Ende mit einem Exzenterhebel (4) verbunden ist, der um eine quer zur Längsachse des Schafts verlaufende Schwenkachse zwischen einer Lösestellung und einer Spannstellung schwenkbar ist.

6. Universalgelenkanordnung Anspruch 5, wobei der Exzenterhebel (4) über einen auch seine Schwenkachse definierenden, das Ende des Schafts (41) durchsetzenden Querstift (42) mit dem Schaft verbunden ist und sich mit einem Exzentemocken auf einer Gegenfläche an der Rückseite der Kugelpfanne (22) oder eines damit verbundenen Bauteils abstützt.

7. Universalgelenkanordnung nach Anspruch 1, wobei der Spannkörper (32) mittels einer auf den Schaft (51) wirkenden Federvorspannung in seine Spannstellung vorgespannt wird und das Betätigungsorgan eine der Spannstellung des Spannkörpers (32) entsprechende Ruhestellung hat und beim Bewegen aus dieser in eine Arbeitsstellung, die der Lösestellung des Spannkörpers (32) entspricht, entgegen der Federvorspannung auf das vom Spannkörper (32) entfernte Ende des Schafts einwirkt.

8. Universalgelenkanordnung nach Anspruch 7, wobei die Federvorspannung durch ein konzentrisch auf dem Schaft (51) angeordnetes und von diesem durchsetztes Tellerfederpaket (53) erzeugt wird, das sich einerseits an der Rückseite der Kugelpfanne (22) und andererseits an einem mit dem freien Schaftende verbundenen Anschlagelement (54) abstützt.

9. Universalgelenkanordnung nach Anspruch 7 oder 8, wobei das Betätigungsorgan ein Schwenkhebel (5) ist, der um eine quer zur Schaftlängsachse verlaufende und gegenüber dieser seitwärts versetzte Schwenkachse (52) schwenkbar ist und über ein Hebelelement derart mit der Endfläche des Schafts (51) zusammenwirkt, daß der Schwenkhebel in seiner der Lösestellung des Spannkörpers (32) entsprechenden Arbeitsstellung eine instabile oder eine stabile Position einnimmt.

10. Universalgelenkanordnung nach Anspruch 1, wobei das Betätigungsorgan ein quer zum Schaft (61, 62) zwischen einer der Spannstellung des Spannkörpers (32) entsprechenden Endstellung und einer der Lösestellung des Spannkörpers entsprechenden Endstellung verschiebbarer Schiebekeil (6) ist, der mit einer am Schaft oder einer an der Kugelpfanne (22) gebildeten Gegenfläche nach Art eines Keilgetriebes zusammenwirkt.

## Claims

1. Universal joint arrangement between the end member (2) of an apparatus carrier and an apparatus holder mounting plate (1) or an apparatus holder, wherein a ball joint element (22), which is arranged on the end member (2), interacts with a ball joint element (12), which is arranged on the apparatus holder mounting plate or on the apparatus holder, and the two ball joint elements (12, 22) can be tensioned together with a frictional fit by means of a joint tensioning mechanism (3),
the joint tensioning mechanism (3) having a tensioning body (32), which is arranged on the mounting plate side or apparatus holder side, for tensioning the mounting plate-side or apparatus holder-side ball joint element (12), which is embodied as a ball shell, against the end member-side ball joint element (22), which is embodied as a ball socket, and a shank (33; 41; 51; 61), which passes from the tensioning body (32) through both ball joint elements (12, 22) to the end member (2), and also an actuator (36; 4; 5; 6) which is arranged behind the end member-side ball joint element (22) and interacts with the shank in order to generate an axial relative movement between itself and the tensioning body (32) for the purpose of the tensioning-together or detensioning of the ball joint elements (12, 22) by the tensioning body (32),
and the mounting plate-side or apparatus holder-side ball joint element (12), which is embodied as a ball shell, having a large central opening (13) through which the shank (33; 41; 51; 61) passes and the play of which determines the pivoting range of this ball joint element (12),
**characterized in that** the ball joint element (22), which is embodied as a ball socket, has an axially protruding hollow journal (31) which guides the shank and on the free end of which the tensioning body (32) is guided in an axially movable manner.

2. Universal joint arrangement according to claim 1, wherein the joint tensioning mechanism (3) has a screw-nut pairing of which one element, the screw or the nut, is connected in a rotationally fixed manner to the tensioning body (32) and the respective other element, the nut or the screw, is connected in a rotationally fixed manner to a finger-actuatable adjusting wheel (36) forming the actuator, the screw (33) forming in each case the aforementioned shank.

3. Universal joint arrangement according to claim 2, wherein the screw (33, 34) is connected in a rotationally fixed manner to the tensioning body (32) and the adjusting wheel (36) is connected in a rotationally fixed manner to the nut (35) which sits, behind the end member-side ball joint element (22), on the screw bolt (33).

4. Universal joint arrangement according to claim 3, wherein the screw (33, 34) has a screw head (34) which is received in the tensioning body (32) in a form-fitting, rotationally fixed manner.

5. Universal joint arrangement according to claim 1, wherein the shank (41) is connected, by its end remote from the tensioning body (32), to an eccentric lever (4) which can be pivoted, about a pivot axis extending transversely to the longitudinal axis of the shank, between a release position and a tensioning position.

6. Universal joint arrangement according to claim 5, wherein the eccentric lever (4) is connected to the shank via a transverse pin (42), which also defines the pivot axis of the eccentric lever and penetrates the end of the shank (41), and is supported with an eccentric cam on a mating surface at the back of the ball socket (22) or a component connected thereto.

7. Universal joint arrangement according to claim 1, wherein the tensioning body (32) is pretensioned into its tensioning position by means of spring pretensioning acting on the shank (51) and the actuator has a rest position corresponding to the tensioning position of the tensioning body (32) and, when moving out of the rest position into a working position corresponding to the release position of the tensioning body (32), acts, counter to the spring pretensioning, on the end of the shank that is remote from the tensioning body (32).

8. Universal joint arrangement according to claim 7, wherein the spring pretensioning is generated by a plate spring set (53) which is arranged concentrically on the shank (51) and penetrated by the shank and is supported, on the one hand, on the back of the ball socket (22) and, on the other hand, on a stop element (54) connected to the free shank end.

9. Universal joint arrangement according to claim 7 or 8, wherein the actuator is a pivot lever (5) which can be pivoted about a pivot axis (52), which extends transversely to the shank longitudinal axis and is laterally offset therefrom, and interacts with the end face of the shank (51) via a lever element in such a way that the pivot lever assumes an unstable or a stable position in its working position corresponding to the release position of the tensioning body (32).

10. Universal joint arrangement according to claim 1, wherein the actuator is a sliding wedge (6) which can be displaced transversely to the shank (61, 62) between an end position corresponding to the tensioning position of the tensioning body (32) and an end position corresponding to the release position of the tensioning body and interacts with a mating surface formed on the shank or a mating surface formed on the ball socket (22) in the manner of a wedge gear.

## Revendications

1. Dispositif de joint universel entre le composant terminal (2) d'un porte-appareil et une platine de montage de support d'appareil (1) ou un support d'appareil, dans lequel un élément de joint à rotule (22) disposé sur le composant terminal (2) coopère avec un élément de joint à rotule (12) disposé sur la platine de montage du support d'appareil ou sur le support d'appareil et les deux éléments de joint à rotule (12, 22) peuvent être serrés ensemble de manière solidaire par friction au moyen d'un mécanisme de serrage de joint (3),
le mécanisme de serrage de joint (3) présentant un corps de serrage (32) disposé côté platine de montage ou côté support d'appareil, destiné à serrer l'élément de joint à rotule (12) côté platine de montage ou côté support d'appareil, réalisé sous la forme de coussinet sphérique, contre l'élément de joint à rotule (22) côté composant terminal, réalisé sous la forme de cuvette sphérique, et une tige (33 ; 41 ; 51 ; 61) allant du corps de serrage (32) au composant terminal (2) à travers les deux éléments de joint à rotule (12, 22), ainsi qu'un organe d'actionnement (36 ; 4 ; 5 ; 6) disposé derrière l'élément de joint à rotule (22) côté composant terminal qui coopère avec la tige au sens de la production d'un mouvement relatif axial entre lui et le corps de serrage (32) dans le but de serrer ensemble ou de desserrer les éléments de joint à rotule (12, 22) par le corps de serrage (32),
et l'élément de joint à rotule (12) côté platine de montage ou côté support d'appareil, réalisé sous la forme de coussinet sphérique, présentant une grande ouverture centrale (13) par laquelle passe la tige (33 ; 41 ; 51 ; 61) et dont le jeu détermine la plage de pivotement de cet élément de joint à rotule (12),
**caractérisé en ce que** l'élément de joint à rotule (22) réalisé sous la forme de cuvette sphérique présente un tourillon creux (31) guidant la tige, faisant saillie axialement, à l'extrémité libre duquel le corps de serrage (32) est guidé de façon mobile axialement.

2. Dispositif de joint universel selon la revendication 1, dans lequel le mécanisme de serrage de joint (3) présente un accouplement vis-écrou dont l'un des éléments, vis ou écrou, est relié au corps de serrage (32) de manière résistant à la rotation et l'autre élément, écrou ou vis, est relié de manière résistant à la rotation à une roue de réglage (36) actionnable avec le doigt, formant l'organe d'actionnement, la vis (33) formant la tige mentionnée.

3. Dispositif de joint universel selon la revendication 2, dans lequel la vis (33, 34) est reliée au corps de serrage (32) de manière résistant à la rotation et la roue de réglage (36) est reliée de manière résistant à la rotation à l'écrou (35) qui est situé sur le boulon fileté (33) derrière l'élément de joint à rotule (22) côté composant terminal.

4. Dispositif de joint universel selon la revendication 3, dans lequel la vis (33, 34) présente une tête de vis (34) logée dans le corps de serrage (32) de manière résistant à la rotation et de manière solidaire avec correspondance de forme.

5. Dispositif de joint universel selon la revendication 1, dans lequel la tige (41) est reliée par son extrémité éloignée du corps de serrage (32) à un levier à excentrique (4) qui peut pivoter entre une position de desserrage et une position de serrage autour d'un axe de pivotement situé transversalement à l'axe longitudinal de la tige.

6. Dispositif de joint universel selon la revendication 5, dans lequel le levier à excentrique (4) est relié à la tige par l'intermédiaire d'une goupille transversale (42) définissant aussi son axe de pivotement, traversant l'extrémité de la tige (41), et s'appuie avec une came excentrique sur une surface opposée située sur la face arrière de la cuvette sphérique (22) ou d'une pièce reliée à celle-ci.

7. Dispositif de joint universel selon la revendication 1, dans lequel le corps de serrage (32) est soumis à une tension initiale dans sa position de serrage au moyen d'une tension initiale par ressort agissant sur la tige (51) et l'organe d'actionnement a une position de repos correspondant à la position de serrage du corps de serrage (32) et, lors du déplacement à partir de celle-ci vers une position de travail qui correspond à la position de desserrage du corps de serrage (32), agit sur l'extrémité de la tige éloignée du corps de serrage (32) en sens inverse de la tension initiale par ressort.

8. Dispositif de joint universel selon la revendication 7, dans lequel la tension initiale par ressort est produite par un ensemble de rondelles Belleville (53) disposé de manière concentrique sur la tige (51) et traversé par celle-ci, ledit ensemble s'appuyant d'une part sur la face arrière de la cuvette sphérique (22) et d'autre part sur un élément de butée (54) relié à l'extrémité libre de la tige.

9. Dispositif de joint universel selon la revendication 7 ou 8, dans lequel l'organe d'actionnement est un levier pivotant (5) qui peut pivoter autour d'un axe de pivotement (52) s'étendant transversalement à l'axe longitudinal de la tige et décalé latéralement par rapport à celui-ci et coopère avec la surface d'extrémité de la tige (51) par l'intermédiaire d'un élément de levier de telle sorte que le levier pivotant prend, dans sa position de travail correspondant à la position de desserrage du corps de serrage (32), une position stable ou instable.

10. Dispositif de joint universel selon la revendication 1, dans lequel l'organe d'actionnement est une clavette coulissante (6) mobile transversalement à la tige (61, 62) entre une position d'extrémité correspondant à la position de serrage du corps de serrage (32) et une position d'extrémité correspondant à la position de desserrage du corps de serrage, ladite clavette coopérant à la manière d'un mécanisme à clavette avec une surface opposée formée sur la tige ou sur la cuvette sphérique (22).
